# EUROPEAN PATENT APPLICATION

(11) **EP 3 446 822 A1**
(43) Date of publication of application: **27.02.2019**
(21) Application number: 18185849.9
(22) Date of filing: 26.07.2018
(51) Int. Cl.: B23K 9/10, B23K 9/32, B23K 9/095, G09B 19/24, G09B 9/00, G02B 27/01, H04W 4/70

(54) **SYSTEMS AND METHODS PROVIDING A COMPUTERIZED EYEWEAR DEVICE TO AID IN WELDING**

(30) Priority: 26.07.2017 US 201715660525
(71) Applicant: Lincoln Global, Inc., Santa Fe Springs, CA 90670 (US)
(72) Inventor: DANIEL, Joseph Allen, Sagamore Hills, OH Ohio 44067 (US); MATTHEWS, William Thomas, Chesterland, OH Ohio (US)
(74) Representative: Grosse Schumacher Knauer von Hirschhausen

(57) **Abstract**

A system to support communication and control in a welding environment is disclosed. In one embodiment the system includes an internet-of-things (loT) technology platform (400) configured to provide scalable, interoperable, and secure communication connections between a plurality of disparate devices within a welding environment. The system also includes a welding power source (140) configured to communicate with the IoT technology platform. The system further includes a computerized eyewear device (150). The computerized eyewear device includes a control and communication circuitry configured to communicate with the welding power source via the IoT technology platform. The computerized eyewear device also includes a transparent display (156) configured to display information received from the welding power source via the IoT technology platform while allowing a user to view a surrounding portion of the welding environment (700) through the transparent display.

## Description

### TECHNICAL FIELD

The invention relates to a system to support communication and/or control in a welding environment according to the preamble of claim 1.

Certain embodiments of the present invention thus relate to welding. More particularly, certain embodiments of the present invention relate to systems and methods providing visualization and communication capabilities to a welder using a welding system via a computerized eyewear device.

### BACKGROUND

Providing information to a welding student in real time during a welding process (whether a real-world welding process or a simulated welding process) is important to aid the welding student in the learning process. Similarly, providing information to an expert welder in real time during a real-world welding process can aid the expert welder in the welding process. Furthermore, providing the ability for a welding student or an expert welder to easily communicate with (e.g., provide commands to) a welding system (real or simulated) can allow for a more efficient and user-friendly welding experience. Today, a welding helmet may be provided with simple light indicators representative of welding information which don't require a welder to be able to focus sharply on the light indicators, since the light indicators may be within one inch of the welder's eye. Simply being able to see that the color of a light indicator is red or green or yellow, for example, is provided. Thus, there is an ongoing need to improve how a welder or welding student interacts with a welding system and how information is provided and viewed in real time.

Further limitations and disadvantages of conventional, traditional, and proposed approaches will become apparent to one of skill in the art, through comparison of such systems and methods with embodiments of the present invention as set forth in the remainder of the present application with reference to the drawings.

### SUMMARY

In one embodiment, a system is provided. The system includes an internet-of-things (IoT) technology platform including at least one server computer having a connection server application. The loT technology platform is configured to be implemented as part of a real world welding environment. The loT technology platform is also configured to provide scalable, interoperable, and secure wireless communication connections between a plurality of disparate devices within the real world welding environment. The loT technology platform is further configured to enable protocol-independent deployment of the plurality of disparate devices within the real world welding environment. The system also includes at least one welding power source, being at least one of the plurality of disparate devices, configured to wirelessly communicate, two-way, with the loT technology platform using the connection server application. The system further includes at least one computerized eyewear device, being at least one of the plurality of disparate devices. The computerized eyewear device includes a control and communication circuitry having a processor and a memory. The control and communication circuitry is configured to wirelessly communicate, two-way, with the welding power source via the loT technology platform using the connection server application. The computerized eyewear device also includes a transparent display configured to display information received by the control and communication circuitry from the welding power source via the loT technology platform using the connection server application. A user is able to view a surrounding portion of the real world welding environment through the transparent display. In one embodiment, the loT technology platform is configured to provide the scalable, interoperable, and secure communication connections between the plurality of disparate devices via WebSockets. The loT technology platform is configured to handle message routing and translation between the plurality of disparate devices. The loT technology platform is configured to allow a developer to build, run, and grow applications to control and report data to and from any of the plurality of disparate devices. The information displayed by the transparent display may be in the form of at least one of text, a graphic, or an image and may include at least one welding parameter received from the welding power source via the loT technology platform. In one embodiment, the computerized eyewear device includes a microphone operatively connected to the control and communication circuitry. The microphone, as operatively connected to the control and communication circuitry, is configured to receive voice-activated user command information from the user and communicate the voice-activated user command information to the welding power source via the loT technology platform. In one embodiment, the computerized eyewear device includes a camera operatively connected to the control and communication circuitry. The camera, as operatively connected to the control and communication circuitry, is configured to capture at least one still image (picture) or moving video of the real world welding environment during a welding operation from the point-of-view of the user and communicate the still image (picture) or moving video to the loT technology platform for recording and storage. In one embodiment, the computerized eyewear device includes a touch-sensitive user interface operatively connected to the control and communication circuitry. The touch-sensitive user interface, as operatively connected to the control and communication circuitry, is configured to allow a user to select command information and provide the command information to the welding power source via the loT technology platform to control the welding power source. The welding power source may be an inverter-based welding power source that supports at least one of a gas metal arc welding (GMAW) operation, a gas tungsten arc welding (GTAW) operation, or a shielded metal arc welding (SMAW) operation.

In another embodiment, a system is provided. The system includes a plurality of disparate devices within a real world welding environment having disparate wireless communication capabilities. The system also includes an loT technology platform including at least one server computer having a connection server application. The loT technology platform is configured to provide scalable, interoperable, and secure wireless communication connections between the plurality of disparate devices. The loT technology platform is also configured to enable protocol-independent deployment of the plurality of disparate devices within the real world welding environment. The plurality of disparate devices includes at least one welding power source configured to wirelessly communicate, two-way, with the loT technology platform using the connection server application. The plurality of disparate devices further includes at least one computerized eyewear device. The computerized eyewear device includes a control and communication circuitry having a processor and a memory. The control and communication circuitry is configured to wirelessly communicate, two-way, with the welding power source via the loT technology platform using the connection server application. The computerized eyewear device also includes a transparent display configured to display information received by the control and communication circuitry from the welding power source via the loT technology platform using the connection server application. A user is able to view a surrounding portion of the real world welding environment through the transparent display. In one embodiment, the computerized eyewear device is configured to provide an augmented reality capability via at least the transparent display. The plurality of disparate devices may include, for example, at least one of at least one welding wire feeder, at least one welding torch or gun, at least one gas meter/sensor operatively connected to at least one tank of shielding gas, at least one mobile phone device (e.g., a "smart" phone), at least one welding helmet, or at least one welding fume extractor. In one embodiment, at least one of the plurality of disparate devices includes at least one sensor configured to sense at least one parameter associated with the at least one of the plurality of disparate devices and communicate the at least one parameter to the loT technology platform using the connection server application. The at least one parameter may include, for example, at least one of a temperature parameter, a pressure parameter, a humidity parameter, a voltage parameter, a current parameter, a wire feed speed parameter, a flow rate parameter, a spatial position parameter, a spatial orientation parameter, or a travel speed parameter.

In one embodiment, a system is provided. The system includes a welding power source of an arc welding system and a computerized eyewear device having a head-up display (HUD). The computerized eyewear device is configured to be worn by a user as eye glasses are worn, while the user also wears a protective welding helmet. The computerized eyewear device is further configured to wirelessly communicate with the welding power source of the arc welding system. The computerized eyewear device may receive information from the welding power source and display the information on the HUD. Furthermore, the user may provide commands to the welding power source via the computerized eyewear device (e.g., via voice activation). The welding power source and the computerized eyewear device may be cooperatively configured to provide one or more of augmented indicators indicative of a user's welding technique and sequencer functionality indicative of a next weld to be made on the HUD, for example.

In another embodiment, a system is provided. The system includes a programmable processor-based subsystem of a virtual reality welding simulation system and a computerized eyewear device having a head-up display (HUD). The computerized eyewear device is configured to be worn by a user as eye glasses are worn, while the user also wears a protective welding helmet. The computerized eyewear device is further configured to wirelessly communicate with the programmable processor-based subsystem of the virtual reality welding simulation system. The computerized eyewear device may receive information from the programmable processor-based subsystem and display the information on the HUD. Furthermore, the user may provide commands to the programmable processor-based subsystem via the computerized eyewear device (e.g., via voice activation). The programmable processor-based subsystem and the computerized eyewear device may be cooperatively configured to provide one or more of virtual reality images associated with a virtual reality welding process and virtual cues and indicators associated with a virtual reality welding process on the HUD, for example.

In accordance with an embodiment, the computerized eyewear device includes a frame configured to be worn on the head of a user, the frame including a bridge configured to be supported on the nose of the user, a brow portion coupled to and extending away from the bridge to a first end remote therefrom and configured to be positioned over a first side of a brow of the user, and a first arm having a first end coupled to the first end of the brow portion and extending to a free end, the first arm being configured to be positioned over a first temple of the user with the free end disposed near a first ear of the user, wherein the bridge is adjustable for selective positioning of the brow portion relative to an eye of the user. The computerized eyewear device also includes a transparent display (the HUD) which may be affixed to the frame and may be movable with respect to the frame through rotation about a first axis that extends parallel to the first brow portion. The computerized eyewear device also includes a housing containing control and communication circuitry affixed to the frame. As an example, the computerized eyewear device may be a Google Glass™ device configured for operation with an arc welding system or a virtual reality arc welding simulation system.

Further embodiments are given in the description, drawings and claims. Details of illustrated embodiments of the present invention will be more fully understood from the following description and drawings.

### BRIEF DESCRIPTION OF THE DRAWINGS

*Fig. 1* illustrates a diagram of an exemplary embodiment of an arc welding system and a computerized eyewear device configured to communicate with the arc welding system;
*Fig. 2* illustrates a diagram of an exemplary embodiment of the computerized eyewear device of *Fig. 1**;*
*Fig. 3* illustrates a diagram of an exemplary embodiment of a virtual reality welding system and a computerized eyewear device configured to communicate with the virtual reality welding system;
*Fig. 4* illustrates a diagram of an exemplary embodiment of an arc welding system and a computerized eyewear device configured to communicate with each other via an internet-of-things (IoT) technology platform;
*Fig. 5* illustrates a diagram of an exemplary embodiment of an internet-of-things (IoT) technology platform having multiple server computers;
*Fig. 6* illustrates a diagram of an exemplary embodiment of a server computer, of the internet-of-things (IoT) technology platform of *Fig. 5**,* having a connection server application; and
*Fig. 7* illustrates a diagram of an exemplary embodiment of a welding environment having multiple welding power sources and multiple computerized eyewear devices that are configured to communicate with each other via an internet-of-things (IoT) technology platform.

### DETAILED DESCRIPTION

The following are definitions of exemplary terms that may be used within the disclosure. Both singular and plural forms of all terms fall within each meaning:

"Software" or "computer program" as used herein includes, but is not limited to, one or more computer readable and/or executable instructions that cause a computer or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, an application, instructions stored in a memory, part of an operating system or other type of executable instructions. It will be appreciated by one of ordinary skill in the art that the form of software is dependent on, for example, requirements of a desired application, the environment it runs on, and/or the desires of a designer/programmer or the like.

"Computer" or "processing element" or "computerized device" as used herein includes, but is not limited to, any programmed or programmable electronic device that can store, retrieve, and process data. "Non-transitory computer-readable media" include, but are not limited to, a CD-ROM, a removable flash memory card, a hard disk drive, a magnetic tape, and a floppy disk.

"Computer memory", as used herein, refers to a storage device configured to store digital data or information which can be retrieved by a computer or processing element.

"Controller", as used herein, refers to the logic circuitry and/or processing elements and associated software or program involved in controlling a device, system, or portion of a system.

The terms "signal", "data", and "information" may be used interchangeably herein and may be in digital or analog form.

The term "welding parameter" is used broadly herein and may refer to characteristics of a portion of a welding output current waveform (e.g., amplitude, pulse width or duration, slope, electrode polarity), a welding process (e.g., a short arc welding process or a pulse welding process), wire feed speed, a modulation frequency, a welding travel speed, or some other parameter associated with real-world welding or simulated welding.

The term "head up display", as used herein, refers to a transparent display that presents information (e.g., high quality images) without requiring a user to look away from their usual viewpoints.

In one embodiment, an arc welding system is provided. The arc welding system includes a welding power source and a computerized eyewear device having a head-up display (HUD) and control and communication circuitry (CCC) operatively connected to the HUD. The computerized eyewear device is configured to be worn by a user as eye glasses are worn, while also wearing a protective welding helmet, and wirelessly communicate with the welding power source. The control and communication circuitry is configured to wirelessly receive information from the welding power source and display the information on the HUD.

In accordance with an embodiment, the computerized eyewear device includes a microphone operatively connected to the control and communication circuitry. The microphone and the control and communication circuitry are configured to receive voice-activated user command information and wirelessly transmit the voice-activated user command information to the welding power source. In accordance with an embodiment, the computerized eyewear device includes a camera operatively connected to the control and communication circuitry. The camera and the control and communication circuitry are configured to capture one or more of still pictures and moving video. In accordance with an embodiment, the control and communication circuitry is configured to access the internet through a wireless access point.

In accordance with an embodiment, the computerized eyewear device includes a frame configured to be worn on the head of a user and at least one housing affixed to the frame containing one or more of the control and communication circuitry, the microphone, and the camera. The HUD is also affixed to the frame and is movable with respect to the frame through rotation about a first axis that extends parallel to a first brow portion. Optionally, the computerized eyewear device may include at least one prescription optical lens held in place by the frame.

In accordance with an embodiment, the frame includes a bridge configured to be supported on the nose of the user, a brow portion coupled to and extending away from the bridge to a first end remote therefrom and configured to be positioned over a first side of a brow of the user, and a first arm having a first end coupled to the first end of the brow portion and extending to a free end. The first arm is configured to be positioned over a first temple of the user with the free end disposed near a first ear of the user. In accordance with an embodiment, the bridge is adjustable for selective positioning of the brow portion relative to an eye of the user.

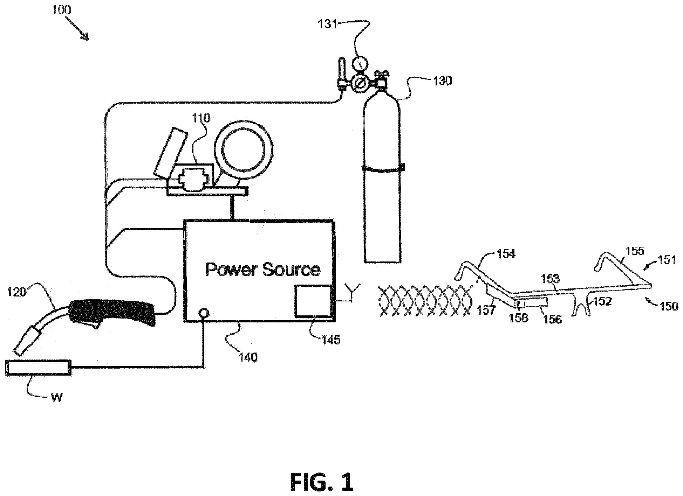

*Fig. 1* illustrates a diagram of an exemplary embodiment of an arc welding system 100 and a computerized eyewear device 150 configured to communicate with the arc welding system 100. The arc welding system 100 includes a wire feeder 110, a welding gun or tool 120, a shielding gas supply 130 (e.g., a tank of shielding gas) with a gas meter/sensor 131, and a welding power source 140. The wire feeder 110, the welding gun 120, the shielding gas supply 130, and the power source 140 are operatively connected to allow a welder to create an electric arc between a welding wire and a workpiece W to create a weld as is well known in the art.

In accordance with an embodiment, the welding power source 140 includes a switching power supply (not shown), a waveform generator (not shown), a controller (not shown), a voltage feedback circuit (not shown), a current feedback circuit (not shown), and a wireless communication circuit 145. The wire feeder 110 feeds the consumable wire welding electrode E toward the workpiece W through the welding gun (welding tool) 120 at a selected wire feed speed (WFS). The wire feeder 110, the consumable welding electrode E, and the workpiece W are not part of the welding power source 140 but may be operatively connected to the welding power source 140 via a welding output cable.

The computerized eyewear device 150 is configured to be worn by a user as eye glasses are worn, while also wearing a conventional protective welding helmet. The protective welding helmet may be a conventional welding helmet that does not have to be modified in any way to accommodate the computerized eyewear device 150. Furthermore, the computerized eyewear device 150 is configured to wirelessly communicate with the welding power source 140 via the wireless communication circuit 145 of the welding power source 140. The wireless communication circuit 145 may include a processor, computer memory, a transmitter, a receiver, and an antenna, in accordance with an embodiment.

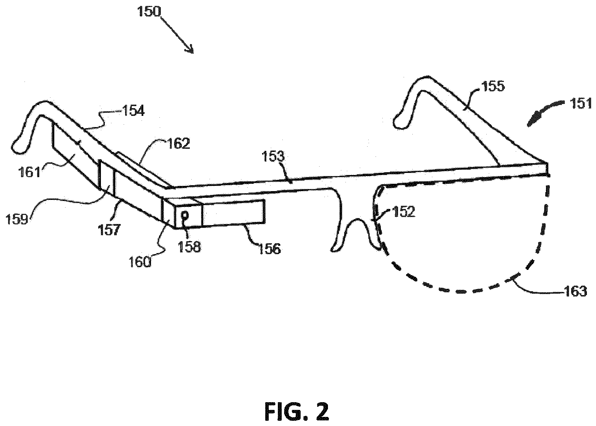

Referring now to *Fig. 1* and *Fig. 2**,* where *Fig. 2* illustrates a diagram of an exemplary embodiment of the computerized eyewear device 150 of *Fig. 1**,* the computerized eyewear device 150 includes a frame 151 configured to be worn on the head of a user. The frame 151 includes a bridge 152 configured to be supported on the nose of the user and a brow portion 153 coupled to and extending away from the bridge 152 to a first and second ends remote therefrom and configured to be positioned over the brows of the user.

The frame also includes a first arm 154 having a first end coupled to the first end of the brow portion 153 and extending to a free end, the first arm being configured to be positioned over a first temple of the user with the free end disposed near a first ear of the user. The frame 151 also includes a second arm 155 having a first end coupled to the second end of the brow portion 153 and extending to a free end, the second arm being configured to be positioned over a second temple of the user with the free end disposed near a second ear of the user. The bridge 152 may be adjustable for selective positioning of the brow portion 153 relative to the eyes of the user, in accordance with an embodiment.

The computerized eyewear device 150 includes a transparent display (e.g., a HUD) 156 affixed to the frame 151. The HUD 156 may be movable with respect to the frame 151 through rotation about a first axis that extends parallel to the brow portion 153, in accordance with an embodiment, and may be configured to display text, graphics, and images. The computerized eyewear device 150 also includes control and communication circuitry (e.g., a computer) 157 enclosed in a housing 162 and affixed to the frame 151. The control and communication circuitry 157 may include a processor and memory, for example. The memory may be coupled to the processor and store software that can be accessed and executed by the processor. The processor may be a microprocessor or a digital signal processor, for example. As an option, the computerized eyewear device 150 may include a camera 158. The HUD 156 and the control and communication circuitry 157 (and, optionally, the camera 158) are operatively connected to provide the functionality described herein. In accordance with an embodiment, the camera 158 is configured to capture still pictures (images) and moving video. In this way, a user may record the welding scenario as viewed by the user from inside the welding helmet.

In accordance with an embodiment, the control and communication circuitry 157 provides two-way communication with the wireless communication circuit 145 of the welding power source 140. Information may be provided from the welding power source 140 to the computerized eyewear device 150 and displayed on the HUD 156. Furthermore, in accordance with an embodiment, the control and communication circuitry 157 is configured to accept voice-activated commands from a user and transmit the commands to the welding power source 140. Communication between the welding power source 140 and the computerized eyewear device 150 may be accomplished by way of, for example, Bluetooth® radio technology, communication protocols described in IEEE 802.11 (including any IEEE 802.11 revisions), cellular technology (such as GSM, CDMA, UMTS, EVDO, WiMax, or LTE), or ZigBee® technology, among other possibilities. In accordance with an embodiment, the computerized eyewear device may also include at least one optical lens 163 that matches a user's corrective visual prescription. In accordance with a further embodiment, the computerized eyewear device may be modular and attachable to normal prescription eye glasses.

Furthermore, in accordance with an embodiment, the welding power source 140 may be accessible by the computerized eyewear device 150 via the Internet. For example, the control and communication circuitry 157 may be configured to access the Internet through a wireless hot spot (e.g., a smart phone or a wireless router) and access the welding power source 140 therethrough. Alternatively, the welding power source 140 may be configured to access the Internet and provide information obtained from the Internet to the computerized eyewear device 150.

Information that may be displayed on the HUD 156 during a real-world welding scenario that may be useful to a welder may be in the form of text, an image, or a graphic. Such information may include, for example, the arc welding process, a welding tool travel angle, a welding tool travel speed, a tip-to-work distance, a wire feed speed, a welding polarity, an output voltage level, an output current level, an arc length, a dime spacing, a whip time, a puddle time, a width of weave, a weave spacing, a tolerance window, a number score, and welding sequence steps. Other information may be displayed as well, in accordance with other embodiments. For example, in an augmented mode, instructional indicators that are used in a virtual reality training environment may be superimposed over an actual weld using the HUD 156. In this manner, a welding student who trained on a virtual reality welding system can transition to a real welding scenario and have the same instructional indicators provided via the HUD. Visual cues or indicators may be displayed to the welder on the HUD of the computerized eyewear device to indicate to the welder if a particular parameter (e.g., a welding tool travel angle) is within an acceptable range or not. Such visual cues or indicators may aid in training by helping an inexperienced welder or welding student to improve his welding technique.

The acquisition of some of the information may rely on the welding tool being spatially tracked (e.g., travel angle, travel speed, tip-to-work distance). In accordance with an embodiment, the welding tool may include an accelerometer device that is operatively connected to the welding power source to provide spatial position or movement information. Other methods of tracking the welding tool are possible as well, such as magnetic tracking techniques, for example.

In accordance with an embodiment, the computerized eyewear device 150 includes a microphone 159 for receiving voice-activated commands from a user. The voice-activated commands, as initiated by a welder, that may be accommodated by the computerized eyewear device 150 in communication with the welding power source 140 may include, for example, commands to change a welding parameter such as a wire feed speed, a welding polarity, and a welding output current level. Other types of commands may be possible as well, in accordance with other embodiments.

In accordance with an embodiment, the computerized eyewear device 150 and/or the welding power source 140 may be programmed with one or more welding software applications configured to accommodate use of the computerized eyewear device 150 with the arc welding system 100. For example, an embodiment of one welding software application may provide a "good weld" recognition capability. Similar to a facial recognition capability, the "good weld" recognition capability may use the camera 158 to acquire an image of a weld created by the user, analyze the image, and provide feedback to the user on the HUD 156 as to the overall external quality of the weld. For example, the text "poor weld", "fair weld", or "good weld" may be displayed to the user. The user may have to take off his welding helmet or lift a visor on the welding helmet to acquire an image of the weld. The welding software application may reside in the computerized eyewear device 150, the welding power source 140, or a combination of both, in accordance with various embodiments.

As another example, an embodiment of a welding software application may provide a welding sequencing capability. When welding a part or assembly with many welds, it is not desirable for a welder to miss a weld. A welding software application may step a welder through the multiple welds for the part. For example, as a welder finishes a current weld on a part or assembly requiring multiple welds, the welder may give a voice command of "next weld". As a result, the welding software application may display to the welder on the HUD 156 an image or graphic (e.g., a 3D representation of the part) providing the location of the next weld to be performed. The type of weld and other information associated with the weld may also be displayed. In accordance with an embodiment where the computerized eyewear device 150 is being spatially tracked, as discussed later herein, the welding software application may display a graphic on the HUD such that graphic indicator is overlaid onto the assembly at the next location to be welded. Other types of welding software applications that operate with the computerized eyewear device are possible as well, in accordance with other embodiments.

In one embodiment, a virtual reality welding system is provided. The virtual reality welding system includes a programmable processor-based subsystem and a computerized eyewear device having a head-up display (HUD) and control and communication circuitry (CCC) operatively connected to the HUD. The computerized eyewear device is configured to be worn by a user as eye glasses are worn, and to wirelessly communicate with the programmable processor-based subsystem. The control and communication circuitry is configured to wirelessly receive information from the programmable processor-based subsystem and display the information on the HUD.

In accordance with an embodiment, the computerized eyewear device further includes a microphone operatively connected to the control and communication circuitry and configured to receive voice-activated user command information and wirelessly transmit the voice-activated user command information to the programmable processor-based subsystem. Alternatively, or in addition, the computerized eyewear device may include a touch-sensitive user interface operatively connected to the control and communication circuitry and configured to allow a user to select command information and wirelessly transmit the command information to the programmable processor-based subsystem.

In accordance with an embodiment, the computerized eyewear device includes a camera operatively connected to the control and communication circuitry. The camera and the control and communication circuitry are configured to capture one or more of still pictures and moving video. In accordance with an embodiment, the control and communication circuitry is configured to access the internet through a wireless access point.

In accordance with an embodiment, the computerized eyewear device includes a frame configured to be worn on the head of a user and at least one housing affixed to the frame containing one or more of the control and communication circuitry, the microphone, and the camera. The HUD is also affixed to the frame and is movable with respect to the frame through rotation about a first axis that extends parallel to a first brow portion. Optionally, the computerized eyewear device may include at least one prescription optical lens held in place by the frame.

In accordance with an embodiment, the frame includes a bridge configured to be supported on the nose of the user, a brow portion coupled to and extending away from the bridge to a first end remote therefrom and configured to be positioned over a first side of a brow of the user, and a first arm having a first end coupled to the first end of the brow portion and extending to a free end. The first arm is configured to be positioned over a first temple of the user with the free end disposed near a first ear of the user. In accordance with an embodiment, the bridge is adjustable for selective positioning of the brow portion relative to an eye of the user.

In accordance with an embodiment, the computerized eyewear device includes at least one motion sensing device operatively connected to the control and communication circuitry and configured to provide spatial information to the programmable processor-based subsystem as a user moves his head.

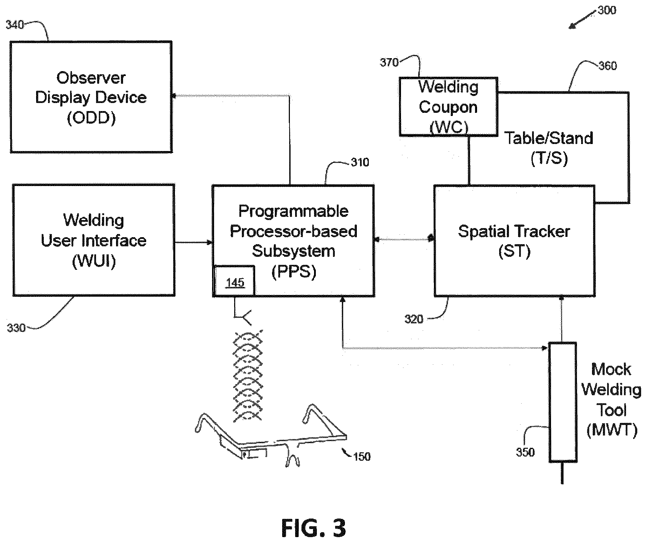

*Fig. 3* illustrates a diagram of an exemplary embodiment of a virtual reality arc welding system 300 and a computerized eyewear device 150 configured to communicate with the virtual reality welding system 300. The virtual reality arc welding (VRAW) system includes a programmable processor-based subsystem, a spatial tracker operatively connected to the programmable processor-based subsystem, at least one mock welding tool capable of being spatially tracked by the spatial tracker, and at least one display device operatively connected to the programmable processor-based subsystem. In accordance with an embodiment, the computerized eyewear device 150 may also be spatially tracked by the spatial tracker. The system is capable of simulating, in a virtual reality space, a weld puddle having real-time molten metal fluidity and heat dissipation characteristics. The system is also capable of displaying the simulated weld puddle on the display device in real-time.

The system 300 includes a programmable processor-based subsystem (PPS) 310. The system 300 further includes a spatial tracker (ST) 320 operatively connected to the PPS 310. The system 300 also includes a physical welding user interface (WUI) 330 operatively connected to the PPS 310 as well as the computerized eyewear device 150 in operative wireless communication with the PPS 310 via a wireless communication circuit 145 of the PPS 310. The system 300 further includes an observer display device (ODD) 340 operatively connected to the PPS 310. The system 300 also includes at least one mock welding tool (MWT) 350 operatively connected to the ST 320 and the PPS 310. The system 300 further includes a table/stand (T/S) 360 and at least one welding coupon (WC) 370 capable of being attached to the T/S 360. In accordance with an alternative embodiment of the present invention, a mock gas bottle is provided (not shown) simulating a source of shielding gas and having an adjustable flow regulator.

In accordance with an embodiment, the computerized eyewear device 150 is configured as previously described herein. However, in this embodiment, the control and communication circuitry 157 provides two-way communication with the wireless communication circuit 145 of the PPS 310. Information may be provided from the PPS 310 to the computerized eyewear device 150 and displayed on the HUD 156. Furthermore, in accordance with an embodiment, the control and communication circuitry 157 is configured to accept voice-activated commands from a user and transmit the commands to the PPS 310. Communication between the PPS 310 and the computerized eyewear device 150 may be accomplished by way of, for example, Bluetooth® radio technology, communication protocols described in IEEE 802.11 (including any IEEE 802.11 revisions), cellular technology (such as GSM, CDMA, UMTS, EVDO, WiMax, or LTE), or ZigBee® technology, among other possibilities.

Furthermore, in accordance with an embodiment, the PPS 310 may be accessible by the computerized eyewear device 150 via the Internet. For example, the control and communication circuitry 157 may be configured to access the Internet through a wireless hot spot (e.g., a smart phone or a wireless router) and access the PPS 310 therethrough. Alternatively, the PPS 310 may be configured to access the Internet and provide information obtained from the Internet to the computerized eyewear device 150.

As before, the user may wear a conventional welding helmet over the computerized eyewear device 150. However, since the welding scenario is a simulated welding scenario, the conventional welding helmet may be fitted with a transparent lens instead of a protective lens that protects against the light and other radiation emitted by a real arc. As such, the user may see through the transparent lens to view the welding coupon 370 and the mock welding tool 350, for example.

In accordance with an embodiment, the computerized eyewear device 150 is configured with an accelerometer device 160 that is operatively connected to the control and communication circuitry 157. Spatial information provided by the accelerometer device as the user moves his head is communicated to the PPS 310 and then to the spatial tracker 320. In this manner, the spatial relationship between the surrounding environment and what the user is seeing through the HUD 156 of the computerized eyewear device 150 may be correlated. As the user proceeds with the virtual welding process using the system 300, anything displayed on the HUD 156 (e.g., a virtual weld puddle) will appear overlaid onto, for example, the welding coupon 370 as the user views the welding coupon through the transparent lens of the conventional welding helmet. In accordance with other embodiments, other motion sensing devices besides that of an accelerometer device may be used. A calibration procedure may be initially performed to correlate the view of the user through the HUD to the surrounding environment, in accordance with an embodiment.

The real-time molten metal fluidity and heat dissipation characteristics of the simulated weld puddle provide real-time visual feedback to a user of the mock welding tool when displayed (e.g., on the HUD of the computerized eyewear device 150 as tracked by the spatial tracker 320), allowing the user to adjust or maintain a welding technique in real-time in response to the real-time visual feedback (i.e., helps the user learn to weld correctly). When the computerized eyewear device 150 is being spatially tracked, the weld puddle will appear at a correct location with respect to the welding coupon as viewed through the HUD.

The displayed weld puddle is representative of a weld puddle that would be formed in the real-world based on the user's welding technique and the selected welding process and parameters. By viewing a puddle (e.g., shape, color, slag, size, stacked dimes), a user can modify his technique to make a good weld and determine the type of welding being done. The shape of the puddle is responsive to the movement of the gun or stick.

The term "real-time", as used herein with respect to a virtual reality or simulated environment, means perceiving and experiencing in time in a virtual or simulated environment in the same way that a user would perceive and experience in a real-world welding scenario. Furthermore, the weld puddle is responsive to the effects of the physical environment including gravity, allowing a user to realistically practice welding in various positions including overhead welding and various pipe welding angles (e.g., 1G, 2G, 5G, 6G).

Information that may be useful to a welding student to display on the HUD 156 during a virtual or simulated welding scenario may be in the form of text, an image, or a graphic. Such information may include, for example, the arc welding process, a welding tool travel angle, a welding tool travel speed, a tip-to-work distance, a set wire feed speed, a set welding polarity, a simulated output voltage level, a set output current level, a simulated arc length, a dime spacing, a whip time, a puddle time, a width of weave, a weave spacing, a tolerance window, a number score, and welding sequence steps. Other information may be displayed as well, in accordance with other embodiments.

In accordance with an embodiment, the computerized eyewear device 150 includes a microphone 159 that is operatively connected to the control and communication circuitry 157 for receiving voice-activated commands from a user. The voice-activated commands, as initiated by a welder, that may be accommodated by the computerized eyewear device 150 in communication with the PPS 310 may include, for example, commands to change a welding parameter such as a simulated wire feed speed, a simulated welding polarity, and a simulated welding output current level. Other types of commands may be possible as well, in accordance with other embodiments.

In accordance with an embodiment, the computerized eyewear device 150 and/or the PPS 310 may be programmed with one or more welding training software applications configured to accommodate use of the computerized eyewear device 150 with the virtual reality arc welding system 300. For example, an embodiment of one welding software application may provide a "good weld" recognition capability. Similar to a facial recognition capability, the "good weld" recognition capability may use an image of a simulated weld created by the user, analyze the image, and provide feedback to the user on the HUD 156 as to the overall external quality of the weld. For example, the text "poor weld", "fair weld", or "good weld" may be displayed to the user. The welding software application may reside in the computerized eyewear device 150, the PPS 310, or a combination of both, in accordance with various embodiments.

As another example, an embodiment of a welding software application may provide a welding sequencing capability. As a welder finishes a current simulated weld on a welding coupon requiring multiple welds, the welder may give a voice command of "next weld". As a result, the welding software application may display to the welder on the HUD 156 an image or graphic providing the location of the next weld to be performed. The type of weld and other information associated with the weld may also be displayed. In accordance with an embodiment where the computerized eyewear device 150 is being spatially tracked, as discussed herein, the welding software application may display a graphic on the HUD such that the graphic is overlaid onto the welding coupon at the next location to be welded. Other types of welding software applications that operate with the computerized eyewear device are possible as well, in accordance with other embodiments.

The computerized eyewear device 150 may be configured to be used with other welding simulation systems in accordance with other embodiments. For example, welding simulations performed on a personal computer (PC) or a tablet computer may be communicatively and functionally integrated with the computerized eyewear device 150 to aid a welding student in learning how to weld. In some simulated and/or virtual welding environments, a welding student may not wear a welding helmet of any kind. Instead, the computerized eyewear device may be the only head gear worn. One optional embodiment of the computerized eyewear device may provide a touch-sensitive user interface (TSUI) 161 which the welding student can use instead of or in addition to voice-activated commands. Such a TSUI would be accessible to the welding student when not wearing a welding helmet, for example. In accordance with an embodiment, the TSUI 161 is operatively connected to the control and communication circuitry 157.

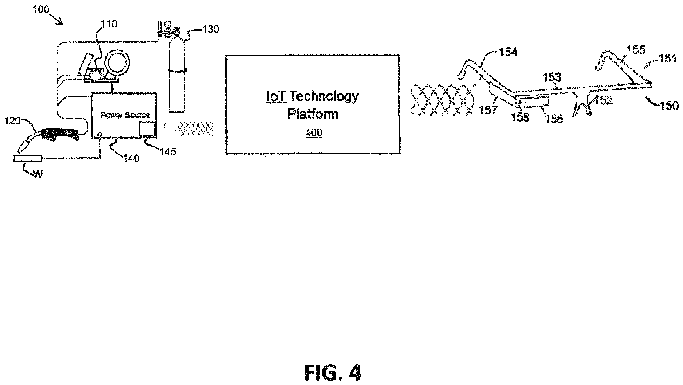

*Fig. 4* illustrates a diagram of an exemplary embodiment of the arc welding system 100 of *Fig. 1* and the computerized eyewear device 150 of *Fig. 1* *or* *Fig. 2*, for example, configured to communicate with each other via an internet-of-things (IoT) technology platform 400. The arc welding system 100, having a welding power source 140, and the computerized eyewear device 150 may exist in a real world welding environment (e.g., a manufacturing facility). The term "real world" is used herein to refer to an actual welding environment as opposed to a virtual welding environment. The IoT technology platform 400 may also exist in the real world welding environment along with the welding power source 140, the computerized eyewear device 150, and possibly other devices (e.g., other welding power sources, other computerized eyewear devices, etc.). In an alternative embodiment, a portion of the IoT technology platform 400 exists within the welding environment and another portion of the IoT technology platform 400 exists externally to the welding environment (e.g. as part of a server farm remotely located from the welding environment). That is, the IoT technology platform 400 may be distributed across several real world environments.

The IoT technology platform 400 provides scalable, interoperable, and secure wired and/or wireless communication connections (e.g., via WebSockets) between multiple disparate devices within the real world welding environment. The IoT technology platform 400 enables protocol-independent deployment of the multiple disparate devices within the real world welding environment. That is, devices that may communicate using different communication protocols can be accommodated by the IoT technology platform 400, allowing the disparate devices to communicate with each other through the IoT technology platform 400. The IoT technology platform 400 is configured to handle message routing and translation between the multiple disparate devices and allow a developer to build, run, and grow applications to control and report data to and from any of the multiple disparate devices. An example of an loT technology platform is provided by ThingWorx®.

As shown in Fig 4, the welding power source 140 of the arc welding system 100, being one of the multiple disparate devices, is configured to wirelessly communicate (two-way) with the loT technology platform 400. In one embodiment, the welding power source 140 is an inverter-based welding power source that supports at least one of a gas metal arc welding (GMAW) operation, a gas tungsten arc welding (GTAW) operation, or a shielded metal arc welding (SMAW) operation. The computerized eyewear device 150, being one of the multiple disparate devices, includes a control and communication circuitry 157 and a transparent display 156.

In one embodiment, the control and communication circuitry 157 is configured to wirelessly communicate (two-way) with the welding power source 140 via the loT technology platform 400. The transparent display 156 is configured to display information received by the control and communication circuitry 157 from the welding power source 140 via the loT technology platform 400 while allowing a user to view a surrounding portion of the real world welding environment through the transparent display. That is, the computerized eyewear device 150 is configured to provide an augmented reality capability via at least the transparent display. For example, the information displayed by the transparent display 156 may be in the form of any of text, graphics, or images and may include welding parameters received from the welding power source 140 via the loT technology platform 400.

In one embodiment, the computerized eyewear device 150 includes a microphone 159 (see *Fig. 2*) operatively connected to the control and communication circuitry 157. Together, the microphone 159 and the control and communication circuitry 157 are configured to receive voice-activated user command information from the user and communicate the voice-activated user command information to the welding power source 140 via the internet-of-things (IoT) technology platform 400.

In one embodiment, the computerized eyewear device 150 includes a camera 158 operatively connected to the control and communication circuitry 157. Together, the camera 158 and the control and communication circuitry 157 are configured to capture at least one still image or moving video of the real world welding environment during a welding operation from the point-of-view of the user and communicate the at least one still image or video to the internet-of-things (IoT) technology platform 400 for recording and storage.

In one embodiment, the computerized eyewear device 150 includes a touch-sensitive user interface 161 (see *Fig. 2*) operatively connected to the control and communication circuitry 157. Together, the touch-sensitive user interface 161 and the control and communication circuitry 157 are configured to allow a user to select command information and provide the command information to the welding power source 140 via the internet-of-things (IoT) technology platform 400 to control the welding power source 140.

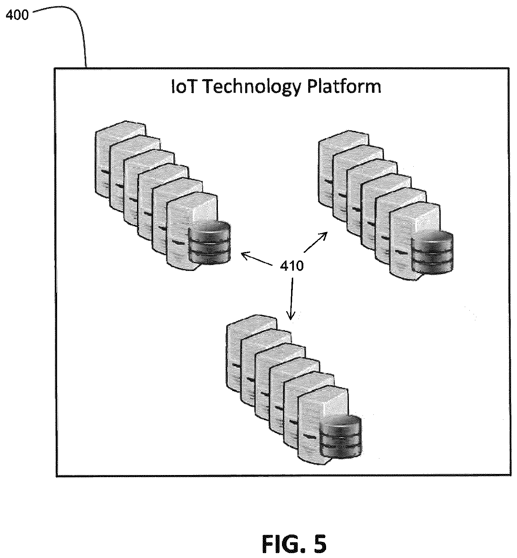

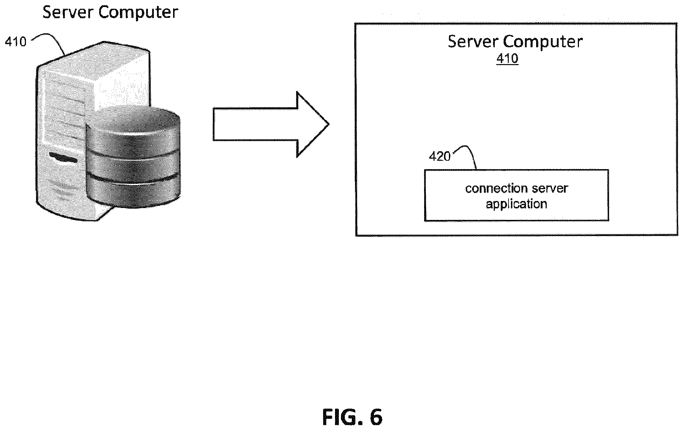

*Fig. 5* illustrates a diagram of an exemplary embodiment of the internet-of-things (IoT) technology platform 400 of *Fig. 4* having multiple server computers 410. The multiple server computers 410 support communication and interaction between the multiple disparate devices within the welding environment. *Fig. 6* illustrates a diagram of an exemplary embodiment of one server computer 410 (of the multiple server computers), of the internet-of-things (IoT) technology platform 400 of *Fig. 5**,* having a connection server application 420. In one embodiment, the connection server application 420 is configured to support the scalable, interoperable, and secure communication connections between the multiple disparate devices, enabling protocol-independent deployment of the multiple disparate devices within the real world welding environment. The connection server application 420 may include, for example, software or a combination of software and hardware, in accordance with various embodiments.

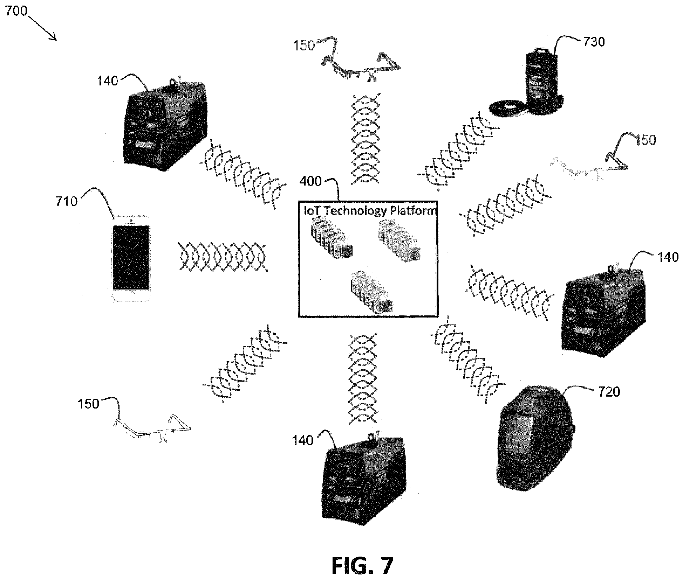

*Fig. 7* illustrates a diagram of an exemplary embodiment of a real world welding environment 700 having multiple disparate devices (e.g., multiple welding power sources 140 and multiple computerized eyewear devices 150) that are configured to communicate with each other via an internet-of-things (IoT) technology platform 400. As illustrated in *Fig. 7**,* communication between the IoT technology platform 400 and any of the multiple disparate devices is via wireless means. In alternative embodiments, wired means and/or a combination of wired and wireless means may be employed. The IoT technology platform 400 facilitates communication between the multiple disparate devices. For example, in one embodiment, any disparate device may communicate with any other disparate device within the welding environment 700 via the loT technology platform.

The multiple disparate devices in the real world welding environment 700 have disparate wireless communication capabilities. Wireless communication supported by the disparate devices and the IoT technology platform 400 may be via any of, for example, Bluetooth® radio technology, communication protocols described in IEEE 802.11 (including any IEEE 802.11 revisions), cellular technology (such as GSM, CDMA, UMTS, EVDO, WiMax, or LTE), or ZigBee® technology, among other possibilities. Again, the loT technology platform 400 is configured to enable protocol-independent deployment of the multiple disparate devices within the real world welding environment at least by handling message routing and translation between the multiple disparate devices.

The disparate devices in the real world welding environment 700 may also include one or more welding wire feeders 110 (see *Fig. 1*), one or more welding guns or torches 120 (see *Fig. 1*), one or more gas meters/sensors 131 operatively connected to one or more tanks of shielding gas 130 (see *Fig. 1*), one or more mobile phone devices 710 ("smart" phones), one or more welding helmets 720 ("smart" welding helmets), and one or more welding fume extractors 730 ("smart" fume extractors). The term "smart" is used herein to refer to devices that have data communication capability and at least some limited capability to process and/or analyze the data which is communicated. Other types of disparate devices, in the real world welding environment 700, are possible as well, in accordance with other embodiments.

Any of the multiple disparate devices in the real world welding environment 700 may include one or more sensors (e.g., gas meter/sensor 131) to sense one or more corresponding parameters associated with the multiple disparate devices. The parameters may be communicated to the loT technology platform 400 (e.g., using the connection server application 420). The parameters may include, for example, a temperature parameter, a pressure parameter, a humidity parameter, a voltage parameter, a current parameter, a wire feed speed parameter, a flow rate parameter, a spatial position parameter, a spatial orientation parameter, or a travel speed parameter. Other types of sensors and corresponding parameters are possible as well, in accordance with other embodiments.

In summary, systems and methods to aid a welder or welding student are provided. A system may include a real-world arc welding system or a virtual reality arc welding system along with a computerized eyewear device having a head-up display (HUD). The computerized eyewear device may be worn by a user under a conventional welding helmet as eye glasses are worn and may wirelessly communicate with a welding power source of a real-world arc welding system or a programmable processor-based subsystem of a virtual reality arc welding system.

A system to support communication and control in a welding environment is also disclosed. In one embodiment the system includes an internet-of-things (IoT) technology platform configured to provide scalable, interoperable, and secure communication connections between a plurality of disparate devices within a welding environment. The system also includes a welding power source configured to communicate with the loT technology platform. The system further includes a computerized eyewear device. The computerized eyewear device includes a control and communication circuitry configured to communicate with the welding power source via the IoT technology platform. The computerized eyewear device also includes a transparent display configured to display information received from the welding power source via the IoT technology platform while allowing a user to view a surrounding portion of the welding environment through the transparent display.

In appended claims, the terms "including" and "having" are used as the plain language equivalents of the term "comprising"; the term "in which" is equivalent to "wherein." Moreover, in appended claims, the terms "first," "second," "third," "upper," "lower," "bottom," "top," etc. are used merely as labels, and are not intended to impose numerical or positional requirements on their objects. Further, the limitations of the appended claims are not written in means-plus-function format and are not intended to be interpreted based on 35 U.S.C. § 112, sixth paragraph, unless and until such claim limitations expressly use the phrase "means for" followed by a statement of function void of further structure. As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property. Moreover, certain embodiments may be shown as having like or similar elements, however, this is merely for illustration purposes, and such embodiments need not necessarily have the same elements unless specified in the claims.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be."

This written description uses examples to disclose the invention, including the best mode, and also to enable one of ordinary skill in the art to practice the invention, including making and using any devices or systems and performing any incorporated methods. The scope of the invention is defined by the claims, and may include other examples that occur to one of ordinary skill in the art. Such other examples are intended to be within the scope of the claims if they have structural elements that do not differentiate from the literal language of the claims, or if they include equivalent structural elements with insubstantial differences from the literal language of the claims.

While the invention of the present application has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the appended claims.

**REFERENCE NUMERALS**

| | | | |
|---|---|---|---|
| 100 | arc welding system | 162 | housing |
| 110 | wire feeder | 163 | optical lens |
| 120 | welding gun or tool | 300 | virtual reality arc welding system |
| 130 | gas supply | 310 | programmable processor-based system (PPS) |
| 131 | gas meter/sensor | | |
| 140 | welding power source | 320 | spatial tracker (ST) |
| 145 | wireless communication circuit | 340 | observer display device (ODD) |
| 150 | computerized eyewear device | 350 | mock welding tool (MWT) |
| 151 | frame | 360 | table/stand (T/S) |
| 152 | bridge | 370 | welding coupon (WC) |
| 153 | brow portion | 400 | internet-of-things (IoT) technology platform |
| 154 | first arm | | |
| 155 | second arm | 410 | server computer |
| 156 | transparent display | 420 | connection server application |
| 157 | communication circuitry | 700 | real world welding environment |
| 158 | camera | 710 | mobile phone device |
| 159 | microphone | 720 | welding helmet |
| 161 | touch-sensitive user interface (TSUI) | 730 | welding fume extractor |

## Claims

1. A system, comprising at least one welding power source (140) and at least one computerized eyewear device (150), **characterized by**:
an internet-of-things (IoT) technology platform (400) including at least one server computer (410) having a connection server application (420), wherein the internet-of-things (IoT) technology platform (400) is configured to be implemented as part of a real world welding environment (700), provide scalable, interoperable, and secure wireless communication connections between a plurality of disparate devices within the real world welding environment (700), and enable protocol-independent deployment of the plurality of disparate devices within the real world welding environment (700);
the least one welding power source (140) is at least one of the plurality of disparate devices, configured to wirelessly communicate, two-way, with the internet-of-things (IoT) technology platform (400) using the connection server application (420); and wherein
the least one computerized eyewear device (150) is at least one of the plurality of disparate devices, including:
a control and communication circuitry (157), having a processor and a memory, configured to wirelessly communicate, two-way, with the at least one welding power source (140) via the internet-of-things (IoT) technology platform (400) using the connection server application (420), and
a transparent display (156) configured to display information received by the control and communication circuitry from the at least one welding power source (140) via the internet-of-things (IoT) technology platform (400) using the connection server application (420) while allowing a user to view a surrounding portion of the real world welding environment through the transparent display (156).

2. The system of claim 1, wherein the internet-of-things (IoT) technology platform is configured to provide the scalable, interoperable, and secure communication connections between the plurality of disparate devices via WebSockets.

3. The system of claim 1 or 2, wherein the internet-of-things (IoT) technology platform is configured to handle message routing and translation between the plurality of disparate devices.

4. The system of one of the claims 1 to 3, wherein the internet-of-things (IoT) technology platform is configured to allow a developer to build, run, and grow applications to control and report data to and from any of the plurality of disparate devices.

5. The system of one of the claims 1 to 4, wherein the information displayed by the transparent display is in the form of at least one of text, a graphic, an image, or a video.

6. The system of one of the claims 1 to 5, wherein the information displayed by the transparent display includes at least one welding parameter received from the at least one welding power source via the internet-of-things (IoT) technology platform.

7. The system of one of the claims 1 to 6, wherein the at least one computerized eyewear device includes a microphone (159) operatively connected to the control and communication circuitry and configured to receive voice-activated user command information from the user and communicate the voice-activated user command information to the at least one welding power source via the internet-of-things (IoT) technology platform.

8. The system of one of the claims 1 to 7, wherein the at least one computerized eyewear device includes a camera (158) operatively connected to the control and communication circuitry and configured to capture at least one still image or moving video of the real world welding environment during a welding operation from the point-of-view of the user and communicate the at least one still image or video to the internet-of-things (IoT) technology platform for recording and storage.

9. The system of one of the claims 1 to 8, wherein the at least one computerized eyewear device includes a touch-sensitive user interface (161) operatively connected to the control and communication circuitry and configured to allow a user to select command information and provide the command information to the at least one welding power source via the internet-of-things (IoT) technology platform to control the at least one welding power source.

10. The system of one of the claims 1 to 9, wherein the at least one welding power source is an inverter-based welding power source that supports at least one of a gas metal arc welding (GMAW) operation, a gas tungsten arc welding (GTAW) operation, or a shielded metal arc welding (SMAW) operation.

11. The system of one of the claims 1 to 10, wherein the at least one computerized eyewear device is configured to provide an augmented reality capability via at least the transparent display.

12. The system of one of the claims 1 to 11, comprising:
a plurality of disparate devices within the real world welding environment having disparate wireless communication capabilities; and
wherein the plurality of disparate devices includes the at least one welding power source and
wherein the plurality of disparate devices includes the at least one computerized eyewear device.

13. The system of claim 11, wherein the plurality of disparate devices includes at least one welding wire feeder, at least one welding gun or torch, at least one gas meter operatively connected to at least one tank of shielding gas, at least one mobile phone device, at least one welding helmet and/or at least one welding fume extractor.

14. The system of one of the claims 11 to 13, wherein at least one of the plurality of disparate devices includes at least one sensor configured to sense at least one parameter associated with the at least one of the plurality of disparate devices and communicate the at least one parameter to the internet-of-things (IoT) technology platform using the connection server application.

15. The system of claim 14, wherein the at least one parameter includes at least one of a temperature parameter, a pressure parameter, a humidity parameter, a voltage parameter, a current parameter, a wire feed speed parameter, a flow rate parameter, a spatial position parameter, a spatial orientation parameter, or a travel speed parameter.
